# FASCICULE DE BREVET EUROPEEN

(11) **EP 3 506 096 B1**
(45) Date de publication et mention de la délivrance du brevet: **17.06.2020**
(21) Numéro de dépôt: 18215626.5
(22) Date de dépôt: 21.12.2018
(51) Int. Cl.: G06F 11/07, G06F 11/16, G05B 9/02

(54) **CALCULATEUR ÉLECTRONIQUE DE MISE EN OEUVRE D'AU MOINS UNE FONCTION CRITIQUE, DISPOSITIF ÉLECTRONIQUE, PROCÉDÉ ET PROGRAMME D'ORDINATEUR ASSOCIÉS**
ELEKTRONISCHER RECHNER ZUR UMSETZUNG MINDESTENS EINER KRITISCHEN FUNKTION, ENTSPRECHENDE ELEKTRONISCHE VORRICHTUNG, ENTSPRECHENDES VERFAHREN UND COMPUTERPROGRAMM
ELECTRONIC COMPUTER FOR CARRYING OUT AT LEAST ONE CRITICAL FUNCTION, ASSOCIATED ELECTRONIC DEVICE, METHOD AND COMPUTER PROGRAM

(30) Priorité: 26.12.2017 FR 1701366
(43) Date de publication de la demande: 03.07.2019
(73) Titulaire: Thales, 92400 Courbevoie (FR)
(72) Inventeur: BOSSON, Joël, 33700 MERIGNAC (FR); CLEMENT, Frederick, 33700 MERIGNAC (FR); CADOTTE, Patrick, 33700 MERIGNAC (FR); FUMEY, Marc, 33700 MERIGNAC (FR); RECULEAU, Jean-Christophe, 33700 MERIGNAC (FR)
(74) Mandataire: Lavoix

(56) Documents cités:
- EP-A1- 1 014 237
- EP-A1- 3 035 135
- US-A- 5 550 736

## Description

La présente invention concerne un calculateur électronique configuré pour mettre en œuvre au moins une fonction critique.

L'invention concerne également un dispositif électronique comprenant une pluralité de tels calculateurs électroniques.

L'invention concerne également un procédé de mise en œuvre d'au moins une fonction critique, le procédé étant mis en œuvre par un tel calculateur électronique.

L'invention concerne également un programme d'ordinateur comportant des instructions logicielles qui, lorsqu'elles sont exécutées par un ordinateur, mettent en œuvre un tel procédé.

L'invention concerne la sécurité d'une installation ou d'un appareil comportant au moins un système électronique, l'appareil étant de préférence un véhicule, tel qu'un véhicule aérien, en particulier un aéronef, un véhicule ferroviaire ou véhicule automobile. En variante, l'installation est une usine chimique ou une centrale électrique.

En particulier, l'invention concerne la mise en œuvre de fonctions critiques, c'est-à-dire qui sont critiques pour la sécurité de l'appareil ou de l'installation. Les commandes de pilotage du véhicule, telles que les commandes de vol d'un aéronef, le système de freinage du véhicule, l'arrêt d'urgence d'une usine chimique ou d'une centrale électrique sont des exemples de telles fonctions critiques.

Par calculateur électronique, on entend une entité de calcul comprenant ses propres ressources. Le calculateur électronique peut être disposé dans un boitier séparé, sur un module installé dans un rack ou sur une carte électronique parmi d'autres dans un boitier.

Par fonction critique, on entend une fonction dont la mise en œuvre doit être surveillée, afin d'assurer un fonctionnement sûr de l'appareil ou de l'installation. Une telle fonction critique nécessite en outre généralement une redondance de chaînes de mise en œuvre de ladite fonction critique et de chaines de surveillance de ladite fonction critique, afin d'assurer la détection de défaut ou d'erreur et également la disponibilité de la fonction.

Par mise en œuvre d'une fonction critique, on entend la réalisation d'un ou plusieurs calculs permettant de générer au moins une donnée de sortie associée à cette fonction critique, à partir d'au moins une donnée d'entrée. L'homme du métier comprendra alors que la nature et le nombre des données de sortie et le ou les calculs effectués caractérisent ladite fonction critique.

Dans le domaine avionique, une fonction critique est par exemple définie par la norme ARP-4754A (*Aerospace Recommended Practice* en anglais).

On connaît un système électronique comprenant un calculateur de commande appelé « COM » (pour COMmand en anglais ou commande en français) constitué d'un calculateur électronique destiné à fournir au moins une commande et un calculateur de surveillance appelé « MON » (pour MONitor en anglais ou surveillance en français) constitué d'un calculateur électronique destiné à surveiller la commande afin de détecter toute incohérence et d'assurer ainsi l'intégrité de la commande. En cas de détection d'une incohérence lors de cette surveillance, les deux calculateurs électroniques sont mis hors service sans chercher l'origine du défaut afin de garantir l'intégrité du système. Ce système est connu sous le nom de paire COM/MON.

Un système comprenant au moins une paire de COM/MON a la capacité de pouvoir détecter au moins une anomalie sur un des calculateurs électroniques. Le système est alors dit de type FAIL SAFE.

Afin d'obtenir un système ayant la capacité de pouvoir continuer à fonctionner avec un niveau d'intégrité suffisant (au moins FAIL SAFE) après la détection d'une anomalie sur un des calculateurs électroniques, il est nécessaire de mettre au moins deux paires de COM/MON en parallèle. Le système est dit alors de type FAIL OPERATIONAL.

Un tel système nécessite donc une quantité importante de calculateurs afin de garantir un niveau d'intégrité satisfaisant engendrant un encombrement et une masse importants.

On connait également du document US 5 550 736 A un système mettant en œuvre une fonction avionique et comprenant des calculateurs redondants et des modules de contrôle disposés en dehors des calculateurs.

Le but de l'invention est alors de proposer un calculateur électronique permettant d'offrir une meilleure disponibilité opérationnelle tout en ayant un encombrement et une masse réduits.

A cet effet, l'invention a pour objet un calculateur électronique selon la revendication 1.

Suivants d'autres aspects avantageux de l'invention, le calculateur électronique est selon l'une des revendications 2 à 4.

L'invention concerne également un dispositif électronique selon la revendication 5.

Suivants d'autres aspects avantageux de l'invention, le dispositif électronique est selon l'un des revendications 6 à 8.

L'invention a également pour objet un procédé de mise en œuvre d'une fonction critique, selon la revendication 9.

L'invention a également pour objet un programme d'ordinateur selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un calculateur électronique selon l'invention ;
- la figure 2 est une représentation schématique d'un dispositif électronique selon un premier mode de réalisation de l'invention, mettant en œuvre une fonction critique et comprenant deux calculateurs électroniques de la figure 1 ;
- la figure 3 est une représentation schématique d'un dispositif électronique selon un deuxième mode de réalisation de l'invention, mettant en œuvre une fonction critique et comprenant trois calculateurs électroniques de la figure 1 ;
- la figure 4 est une représentation schématique d'un dispositif électronique selon un troisième mode de réalisation de l'invention, mettant en œuvre une fonction critique et comprenant quatre calculateurs électroniques de la figure 1 ;
- la figure 5 est une représentation schématique d'un dispositif électronique selon un quatrième mode de réalisation de l'invention, mettant en œuvre deux fonctions critiques et comprenant trois calculateurs électroniques de la figure 1 ;
- la figure 6 est un organigramme d'un procédé, selon l'invention, de mise en œuvre d'une fonction critique.

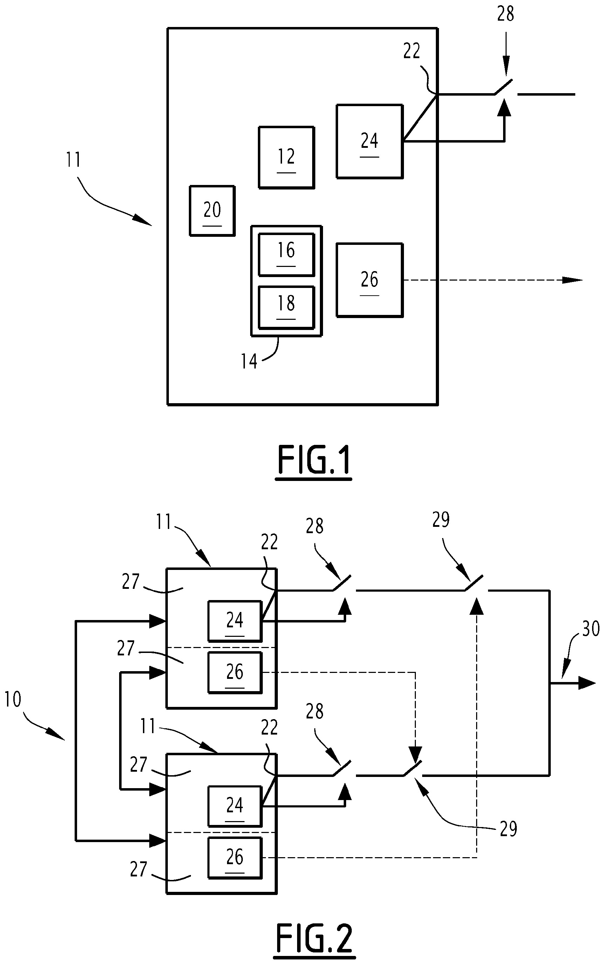

Les figures 2 à 5 représentent différents modes de réalisation d'un dispositif électronique 10 selon l'invention, configuré pour mettre en œuvre au moins une fonction critique, comprenant une pluralité de calculateurs électroniques 11.

Chaque calculateur électronique 11, visible sur la figure 1, est apte à recevoir au moins une donnée d'entrée, à mettre en œuvre au moins une fonction critique à partir de l'au moins une donnée d'entrée et à délivrer au moins une donnée de sortie associée à chaque fonction critique.

Le calculateur électronique 11 est, par exemple, un calculateur avionique. Le calculateur électronique 11 est alors destiné à être embarqué à bord de d'un véhicule aérien, en particulier un aéronef. La fonction critique mise en œuvre par le calculateur électronique 11 est alors une fonction critique avionique, telle qu'une fonction de commande de vol ou une fonction de freinage de l'aéronef. Le calculateur électronique 11 est alors, de préférence, conforme à la norme DO97 (*Integrated Modular Avionics Development Guidance and Certification Considerations* en anglais).

Sur la figure 1, le calculateur électronique 11 comprend une mémoire 12 apte à stocker au moins une application logicielle associée à chaque fonction critique, une unité de calcul 14 apte à exécuter chaque application logicielle afin de mettre en œuvre chaque fonction critique, l'unité de calcul 14 comportant des ressources 16 et hébergeant un gestionnaire de tâches 18, une alimentation électrique 20 et au moins un port de sortie 22 configuré pour délivrer au moins une donnée de sortie associée à chaque fonction critique.

Le calculateur électronique 11 comprend avantageusement sa propre unité de calcul 14 et sa propre alimentation électrique 20. Le calculateur électronique 11 est, par exemple, en forme d'un module électronique indépendant d'autre(s) module(s) électronique(s) et apte à être installé dans un rack, non représenté, ou encore en forme d'une carte électronique indépendante d'autre(s) carte(s) électronique (s) et apte à être installé dans un coffret électronique. En variante, le calculateur électronique 11 a son propre coffret électronique, et est alors le seul calculateur disposé à l'intérieur d'un boitier de protection associé au coffret.

Le calculateur électronique 11 comprend en outre, selon l'invention, au moins un module de commande 24 configuré pour mettre en œuvre une fonction critique respective, et au moins un module de surveillance 26 d'un module de commande 24 d'un autre calculateur électronique 11.

On entend par « module de commande d'un autre calculateur électronique », que ledit module de commande est installé sur un autre calculateur électronique.

Le calculateur électronique 11 est, de préférence, conforme à la norme ARINC653 et/ou à la norme DO297 permettant un partitionnement temporel et spatial des ressources 16 et d'assurer l'indépendance des applications logicielles vis-à-vis de l'unité de calcul 14. Le partitionnement permet la coexistence, sur le même calculateur électronique 11, de plusieurs fonctions critiques différentes.

Ainsi, le calculateur électronique 11 comprend plusieurs partitions informatiques 27 distinctes, et chaque module parmi l'au moins un module de commande 24 et l'au moins un module de surveillance 26 est installé dans une partition 27 respective. En particulier, le calculateur électronique 11 comprend une partition 27 distincte par fonction critique mise en œuvre.

Dans l'exemple de la figure 1, un seul module de commande 24 et un seul module de surveillance 26 sont représentés. Néanmoins, l'homme du métier comprendra que le calculateur électronique 11 comprend, dans certains modes de réalisation de l'invention, une pluralité de modules de commande 24 et/ou une pluralité de modules de surveillance 26, comme cela sera décrit par la suite.

Dans l'exemple de la figure 2, le module de surveillance 26 du premier calculateur électronique 11 est configuré pour surveiller le module de commande 24 du deuxième calculateur électronique 11 et le module de surveillance 26 du deuxième calculateur électronique 11 est configuré pour surveiller le module de commande 24 du premier calculateur électronique 11. Par « premier calculateur électronique » on entend représenté en haut de la figure et par « deuxième calculateur électronique » on entend représenté sur la figure sous le « premier calculateur électronique ».

Chaque application logicielle est destinée à être exécutée par l'unité de calcul 14 afin de mettre en œuvre une fonction critique associée et fournir au moins une donnée de sortie associée à ladite fonction critique. Chaque application logicielle est alors configurée pour utiliser des ressources 16 de l'unité de calcul 14.

Les ressources 16 de l'unité de calcul 14 sont des éléments physiques ou logiques propres à être mis à disposition de la ou des applications logicielles.

Les ressources 16 sont, par exemple, des ressources de type traitement de données (en anglais « *processing* »), des ressources de type entrées et sorties, des ressources spécifiques au réseau avionique, par exemple, les routeurs de communication d'un réseau ARINC664, des ressources de type graphique, des ressources de type mémoire de masse (en anglais « *mass memory* ») ou de sortie logique.

Le gestionnaire de tâches 18 est, de préférence, un moniteur temps réel permettant de séquencer les différentes applications, en assurant une ségrégation adéquate pour tenir les objectifs de sécurité au travers de l'implémentation de partitions informatiques 27.

En variante, le gestionnaire de tâches 18 est un système d'exploitation. Chaque application logicielle est alors conçue pour émettre un ou plusieurs appels à destination du système d'exploitation 18 hébergé par l'unité de calcul 14. Le système d'exploitation 18 est, par exemple, un système d'exploitation conforme à la norme ARINC 653, ou un système d'exploitation POSIX, ou encore un hyperviseur, ou encore un middleware. L'homme du métier comprendra alors que le système d'exploitation 18 s'entend au sens large, et est, de manière plus générale, un ensemble d'au moins un logiciel de base, conçu pour offrir des services de différents types à chaque application. Un service est donc une fonction du logiciel de base utilisable par la ou les applications logicielles et atteignable par un appel, également appelé appel à un service (de l'OS) ou encore appel système. Un exemple de logiciel de base est un OS ARINC 653 ou POSIX qui fournit de tels services.

L'alimentation électrique 20 est apte à recevoir du courant électrique et à alimenter avec ledit courant électrique le calculateur électronique 11 et ses différents composants.

Le module de commande 24 est configuré pour recevoir au moins une donnée d'entrée, pour mettre en œuvre une fonction critique respective à partir de l'au moins une donnée d'entrée et apte à délivrer au moins une donnée de sortie correspondant à ladite fonction critique.

En particulier, le module de commande 24 est configuré pour communiquer avec l'unité de calcul 14. Le module de commande 24 est apte à envoyer un ordre d'exécution à l'unité de calcul 14 afin que l'unité de calcul 14 exécute l'application logicielle associée à la fonction critique associé audit module de commande 24. Le module de commande 24 est configuré pour recevoir l'au moins une donnée de sortie associée à la fonction critique. Le module de commande 24 est apte à délivrer l'au moins une donnée de sortie par le port de sortie 22.

Le module de commande 24 est surveillé par un module de surveillance 26 d'un autre calculateur électronique 11, et est alors configuré pour envoyer audit module de surveillance 26 associé le résultat de la mise en œuvre de la fonction critique.

Le module de commande 24 est configuré pour inhiber la délivrance de l'au moins une donnée de sortie associée en cas de détection d'une incohérence entre le résultat de sa mise en œuvre de la fonction critique respective et celui reçu de la part du module de surveillance 26 de l'autre calculateur électronique 11. Une incohérence est détectée par comparaison entre les deux résultats et, par exemple, par détection d'une différence de valeur supérieure à un seuil prédéterminé. L'inhibition de la donnée de sortie par le module de commande 24 est illustrée sur les figures 2 à 5 par une flèche en trait plein pointant sur un interrupteur 28. En effet, chaque calculateur électronique 11 est susceptible de rencontrer des pannes matérielles dues à au moins un dysfonctionnement d'un composant matériel du calculateur électronique 11 et/ou de rencontrer des anomalies logicielles dues à des erreurs dans une application logicielle, et la fonction critique correspondante doit être inhibée. En l'absence d'anomalie matérielle et logicielle, le calculateur électronique 11 est apte à mettre en œuvre l'au moins une fonction critique de façon satisfaisante et est dans un état dit fonctionnel.

Le module de surveillance 26 est configuré pour recevoir au moins une donnée d'entrée et pour mettre en mettre en œuvre la même fonction critique respective que celle mise en œuvre par le module de commande 24 surveillé. Le module de surveillance 26 est configuré pour envoyer au module de commande 24 associé le résultat de la mise en œuvre de la fonction critique.

Le module de commande 24 est configuré, en outre, pour recevoir, de la part du module de surveillance 26 associé, le résultat de mise en œuvre de la fonction critique correspondante.

Si le calculateur électronique 11 comprenant le module de commande 24 et l'autre calculateur électronique 11 comprenant le module de surveillance 26 sont chacun dans un état fonctionnel, chaque module 24, 26 est apte à mettre en œuvre la fonction critique associée de façon satisfaisante et aucune incohérence entre les résultats des mises en œuvre de la fonction critique n'est détectée par le module de commande 24.

En cas de panne matérielle du calculateur électronique 11, les modules 24, 26 compris dans ledit calculateur électronique 11 ne sont pas apte à mettre en œuvre la fonction critique de façon satisfaisante, et le calculateur électronique 11 est dans un état dit dysfonctionnel, apte à être détecté par le module de surveillance 26 de l'autre calculateur électronique 11 qui est associé au module de commande 24 dudit calculateur électronique 11. Si le calculateur électronique 11 comprenant le module de commande 24 est dans un état fonctionnel et l'autre calculateur électronique 11 comprenant le module de surveillance 26 est dans un état dysfonctionnel, le module de surveillance 26 n'est pas apte à mettre en œuvre la fonction critique de façon satisfaisante et le module de commande 24 est alors apte à détecter une incohérence par comparaison entre les résultats des mises en œuvre de la fonction critique.

En cas de panne logicielle, le calculateur électronique 11 n'est pas apte à mettre en œuvre la fonction critique associée à l'application logicielle défectueuse de façon satisfaisante. Cependant, le calculateur électronique 11 est apte à mettre en œuvre les éventuelles autres fonctions critiques associées aux applications logicielles non défectueuses. Le calculateur électronique 11 est alors dans un état dit dégradé. Si le calculateur électronique 11 comprenant le module de commande 24 est dans un état fonctionnel et l'autre calculateur électronique 11 comprenant le module de surveillance 26 est dans un état dégradé et si la fonction critique respective des modules 24, 26 est associée à l'application logicielle défectueuse, le module de surveillance 26 n'est pas apte à mettre en œuvre la fonction critique de façon satisfaisante et le module de commande 24 est alors apte à détecter une incohérence par comparaison entre les résultats des mises en œuvre de la fonction critique.

Le module de surveillance 26 est configuré pour recevoir de la part du module de commande 24 associé, le résultat de mise en œuvre de la fonction critique correspondante. Le module de surveillance 26 est configuré pour inhiber la délivrance par ledit module de commande 24 de l'autre calculateur électronique 11 de l'au moins une donnée de sortie associée en cas de détection d'une incohérence entre le résultat de sa mise en œuvre de la fonction critique respective et celui reçu de la part du module de commande 24 de l'autre calculateur électronique 11. L'inhibition de la donnée de sortie par le module de surveillance 26 est illustrée sur les figures 2 à 5 par une flèche en trait pointillé pointant sur un autre interrupteur 29. L'incohérence détectée par le module de surveillance 26 peut être due à une panne matérielle et/ou à une erreur logicielle.

Une donnée de sortie délivrée par un port de sortie 22 est donc configurée pour être inhibée par le module de commande 24 respectif et/ou par le module de surveillance 26 associé audit module de commande 24.

La mise en œuvre d'un tel système est donc simple, car il n'est pas nécessaire de localiser l'origine de la panne matérielle ou de l'erreur logicielle au contraire de systèmes de l'état de la technique basés sur un vote entre plusieurs unités.

De plus, la paire constituée d'un module de commande 24 et d'un module de surveillance 26 associé a la capacité de pouvoir détecter au moins une anomalie sur un des calculateurs électroniques 11, et est donc de type FAIL SAFE.

Sur la figure 2, le dispositif électronique 10 selon un premier mode de réalisation est configuré pour mettre en œuvre une fonction critique donnée comprend deux calculateurs électroniques 11 tels que décrits ci-dessus, et une borne de sortie 30, la borne de sortie 30 étant apte à fournir l'au moins une donnée de sortie associée à la fonction critique à l'extérieur du dispositif électronique 10.

Chaque calculateur électronique 11 comprend en outre deux partitions informatiques 27 distinctes, chaque module 24, 26 étant installé sur une partition informatique 27 respective.

Selon ce premier mode de réalisation, le module de surveillance 26 du premier calculateur électronique 11 est configuré pour surveiller le module de commande 24 du deuxième calculateur électronique 11 et le module de surveillance 26 du deuxième calculateur électronique 11 est configuré pour surveiller le module de commande 24 du premier calculateur électronique 11. Chaque module de commande 24 est configuré pour communiquer avec le module de surveillance 26 associé le résultat de la mise en œuvre de la fonction critique afin de détecter une éventuelle incohérence et d'inhiber la délivrance de l'au moins une donnée de sortie associée.

Le dispositif électronique 10 selon le premier mode de réalisation, représenté sur la figure 2, est apte à détecter une panne matérielle sur un des deux calculateurs électroniques 11, à inhiber la délivrance de la donnée de sortie délivrée par le calculateur électronique 11 défectueux et à délivrer la donnée de sortie de l'autre calculateur électronique 11. En outre, le dispositif électronique 10 est apte à détecter une erreur logicielle sur un module 24, 26 et d'inhiber la délivrance de la donnée de sortie associée à la paire de module 24, 26 comprenant le module 24, 26 défectueux. Le dispositif électronique 10 est ensuite encore apte à délivrer la donnée de sortie et, en outre, à détecter une panne matérielle ou une erreur logicielle supplémentaire sur la paire de modules 24, 26 opérationnelle. Le dispositif électronique 10 selon le premier mode de réalisation, représenté sur la figure 2, est alors de type FAIL OPERATIONAL concernant les erreurs logicielles.

Par conséquent, alors qu'un système COM/MON de l'état de la technique nécessite deux paires de calculateurs électroniques, le dispositif électronique 10 selon le premier mode de réalisation comprend seulement deux calculateurs électroniques 11 pour mettre en œuvre la fonction critique avec le même niveau de sûreté. Le dispositif électronique 10 selon l'invention permet alors de réduire le nombre de calculateurs électroniques 11 avec en conséquence un encombrement et une masse moindres.

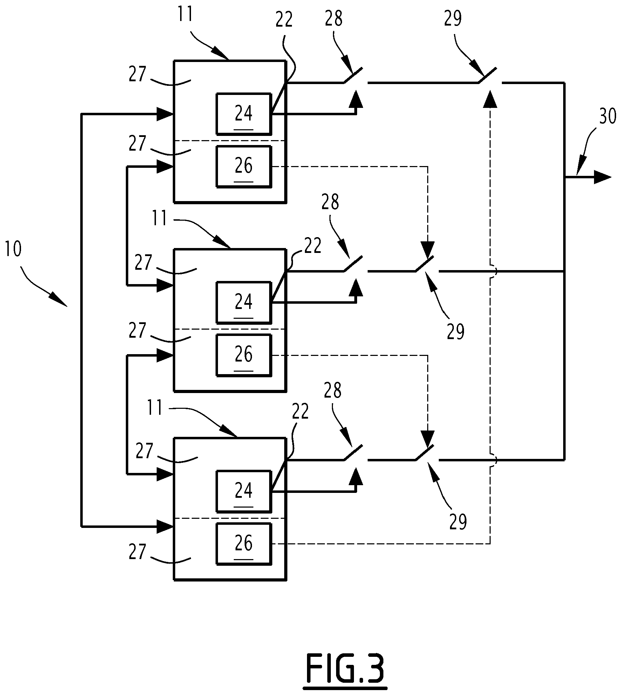

Sur la figure 3, le dispositif électronique 10 selon un deuxième mode de réalisation, configuré pour mettre en œuvre une fonction critique donnée, et comprend trois calculateurs électroniques 11 tels que décrits ci-dessus.

Chaque calculateur électronique 11 comprend en outre deux partitions informatiques 27 distinctes, chaque module 24, 26 étant installé sur une partition informatique 27 respective.

Le module de surveillance 26 du premier calculateur électronique 11 est configuré pour surveiller le module de commande 24 du deuxième calculateur électronique 11, le module de surveillance 26 du deuxième calculateur électronique 11 est configuré pour surveiller le module de commande 24 du troisième calculateur électronique 11 et le module de surveillance 26 du troisième calculateur électronique 11 est configuré pour surveiller le module de commande 24 du premier calculateur électronique 11.

Chaque module de commande 24 est configuré pour communiquer, avec le module de surveillance 26 associé, le résultat de la mise en œuvre de la fonction critique afin de détecter une éventuelle incohérence et d'inhiber la délivrance de l'au moins une donnée de sortie associée.

Le dispositif électronique 10 selon le deuxième mode de réalisation, représenté sur la figure 3, est apte à détecter une panne matérielle ou une erreur logicielle de plus que le dispositif électronique 10 selon le premier mode de réalisation, représenté sur la figure 2. Par conséquent, alors qu'un système COM/MON de l'état de la technique nécessite deux paires de calculateurs électroniques pour mettre en œuvre une fonction critique et détecter une panne matérielle ou une erreur logicielle, le dispositif électronique 10 selon le deuxième mode de réalisation, comprend seulement trois calculateurs électroniques 11 pour mettre en œuvre la fonction critique et détecter une panne matérielle ou deux erreurs logicielles. Le dispositif électronique 10 selon le deuxième mode de réalisation permet donc de réduire le nombre de calculateurs nécessaires tout en permettant la détection d'une erreur logicielle de plus.

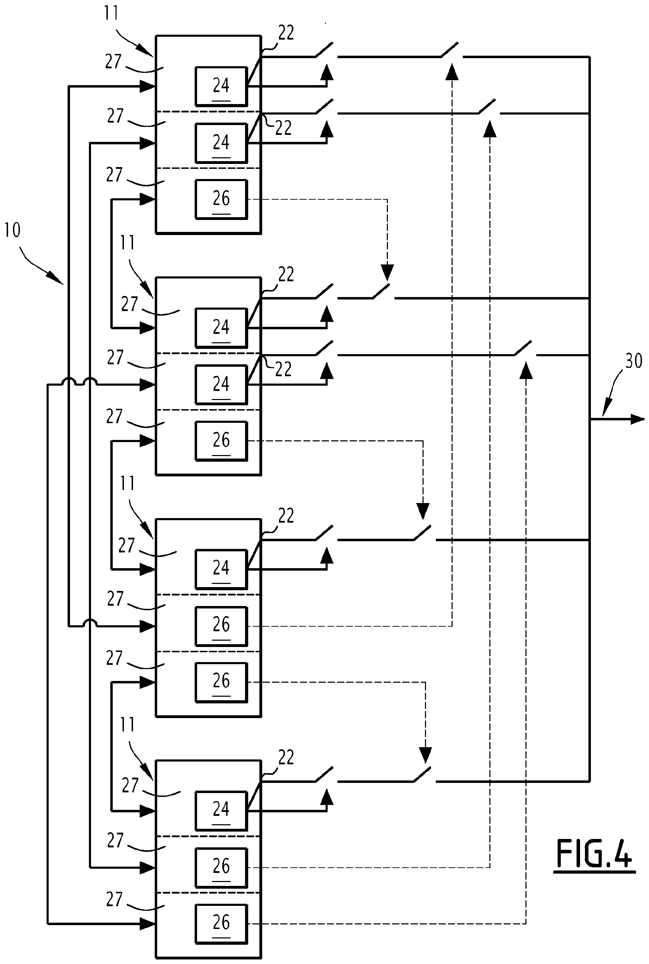

Sur la figure 4, le dispositif électronique 10 selon un troisième mode de réalisation, configuré pour mettre en œuvre une fonction critique donnée, comprend quatre calculateurs électroniques 11 tels que décrits ci-dessus.

Chaque calculateur électronique 11 comprend en outre trois partitions informatique 27 distinctes, chaque module 24, 26 étant installé sur une partition informatique 27 respective.

Chaque calculateur électronique 11 comprend trois modules 24, 26. En particulier, les deux premiers calculateurs électroniques 11 comprennent deux modules de commande 24 et un module de surveillance 26 et les deux derniers calculateurs électroniques 11 comprennent un module de commande 24 et deux modules de surveillance 26.

Comme visible sur la figure 4, le module de surveillance 26 du premier calculateur électronique 11 est configuré pour surveiller le premier module de commande 24 du deuxième calculateur électronique 11; le module de surveillance 26 du deuxième calculateur électronique 11 est configuré pour surveiller le module de commande 24 du troisième calculateur électronique 11; et le premier module de surveillance 26 du troisième calculateur électronique 11 est configuré pour surveiller le premier module de commande 24 du premier calculateur électronique 11.

Le deuxième module de surveillance 26 du troisième calculateur électronique 11 est configuré pour surveiller le module de commande 24 du quatrième calculateur électronique 11; le premier module de surveillance 26 du quatrième calculateur électronique 11 est configuré pour surveiller le deuxième module de commande 24 du premier calculateur électronique 11; et le deuxième module de surveillance 26 du quatrième calculateur électronique 11 est configuré pour surveiller le deuxième module de commande 24 du deuxième calculateur électronique 11.

Le dispositif électronique 10 selon le troisième mode de réalisation, représenté sur la figure 4 est apte à détecter une panne matérielle ou une erreur logicielle de plus que le dispositif électronique 10 selon le deuxième mode de réalisation, représenté sur la figure 3.

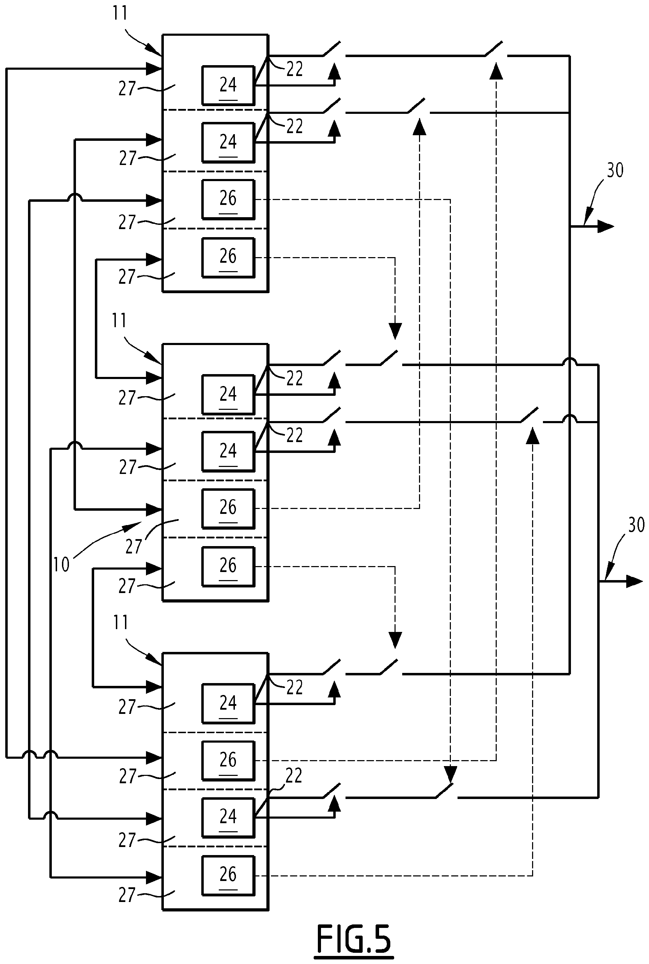

Sur la figure 5, le dispositif électronique 10 selon un quatrième mode de réalisation, configuré pour mettre en œuvre deux fonctions critiques, à savoir une première fonction critique et une deuxième fonction critique. Il comprend trois calculateurs électroniques 11, tels que décrits ci-dessus et deux bornes de sortie 30, chaque borne de sortie 30 étant apte à fournir l'au moins une donnée de sortie associée à une des deux fonctions critiques à l'extérieur du dispositif électronique 10.

Chaque calculateur électronique 11 comprend deux modules de commandes 24 et deux modules de surveillance 26.

Dans l'exemple de la figure 5, chaque calculateur électronique 11 comprend en outre quatre partitions informatique 27 distinctes, chaque module 24, 26 étant installé sur une partition informatique 27 respective.

Les deux modules de commande 24 du premier calculateur électronique 11 sont aptes à mettre en œuvre la première fonction critique. Les deux modules de commande 24 du deuxième calculateur électronique 11 sont aptes à mettre en œuvre la deuxième fonction critique. Chaque module de commande 24 du troisième calculateur électronique 11 est apte à mettre en œuvre une fonction critique différente parmi la première et la deuxième fonctions critiques.

Comme visible sur la figure 5, le premier module de surveillance 26 du premier calculateur électronique 11 est configuré pour surveiller le deuxième module de commande 24 du troisième calculateur électronique 11; le deuxième module de surveillance 26 du premier calculateur électronique 11 est configuré pour surveiller le premier module de commande 24 du deuxième calculateur électronique 11; et le premier module de surveillance 26 du deuxième calculateur électronique 11 est configuré pour surveiller le deuxième module de commande 24 du premier calculateur électronique 11.

Le deuxième module de surveillance 26 du deuxième calculateur électronique 11 est configuré pour surveiller le premier module de commande 24 du troisième calculateur électronique 11; le premier module de surveillance 26 du troisième calculateur électronique 11 est configuré pour surveiller le premier module de commande 24 du premier calculateur électronique 11; et le deuxième module de surveillance 26 du troisième calculateur électronique 11 est configuré pour surveiller le deuxième module de commande 24 du deuxième calculateur électronique 11.

Au vu des différents exemples décrits ci-dessus, l'homme du métier comprendra que l'invention est généralisable à un dispositif électronique 10 comprenant N calculateurs électroniques 11, N étant un nombre entier supérieur ou égal à 2.

De préférence, lorsque le nombre N de calculateurs électroniques 11 est pair, et pour une fonction critique donnée, (N/2) calculateurs électroniques 11 comprennent chacun (N/2-1) modules de commande 24 et (N/2) modules de surveillance 26, (N/2) autres calculateurs électroniques 11 comprennent chacun (N/2) modules de commande 24 et (N/2-1) modules de surveillance 26.

De préférence, lorsque le nombre N de calculateurs électroniques 11 est impair, et pour une fonction critique donnée, chaque calculateur électronique 11 comprend ((N-1)/2) modules de commande 24 et ((N-1)/2) modules de surveillance 26.

Le dispositif électronique 10 est alors apte à mettre en œuvre au moins une fonction critique avec le niveau de sûreté et de redondance désirée avec un nombre réduit de calculateurs électroniques 11.

Selon un mode préférentiel de l'invention, pour chaque calculateur électronique 11, l'ensemble des calculateurs électroniques 11 comportant un module de commande 24 surveillé par un module de surveillance 26 dudit calculateur électronique 11 et l'ensemble des calculateurs électroniques 11 comprenant un module de surveillance 26 surveillant un module de commande 24 dudit calculateur électronique 11 sont disjoints.

Par exemple, dans le dispositif électronique 10 selon le troisième mode de réalisation, représenté sur la figure 4, les modules de commande 24 du premier calculateur électronique 11 sont surveillés par les modules de surveillances 26 du troisième et du quatrième calculateur électronique 11 et le module de surveillance 26 du premier calculateur électronique 11 surveille le module de commande 24 du deuxième calculateur électronique 11.

Cette architecture du dispositif électronique 10 permet une meilleure redondance et garantit une meilleure disponibilité opérationnelle. En effet, chaque calculateur électronique 11 dépend ainsi de plusieurs autres calculateurs électroniques 11, et est donc moins affecté en cas d'anomalie sur un calculateur électronique 11.

Selon un aspect complémentaire de l'invention, chaque calculateur électronique 11 est matériellement dissemblant d'un autre calculateur électronique 11, et est alors réalisé d'un point de vue matériel sous une forme différente, comme par exemple un composant logique programmable, tel qu'un FPGA (de l'anglais *Field Programmable Gate Array*), ou un circuit intégré dédié, tel qu'un ASIC (de l'anglais *Application Specific Integrated Circuit*) pour l'autre calculateur électronique 11. Ainsi, si une panne générique apparait sur un certain type de structure, tous les calculateurs électroniques 11 ne deviennent pas défectueux en même temps et l'intégrité du dispositif électronique 10 est donc préservée. Avec cette dissemblance matérielle en complément facultatif, la mise en œuvre de la fonction critique est encore plus sûre.

En variante ou en complément de l'aspect complémentaire précité, chaque module parmi les modules 24, 26 associés à même une fonction critique est, d'un point de vue logiciel, dissemblant d'un autre module 24, 26 et est alors réalisé d'un point de vue logiciel sous une forme différente, par exemple en utilisant un langage de programmation différent. Ainsi, si une erreur logicielle apparait sur un certain type de logiciel, tous les modules 24, 26 associés à une même fonction critique ne deviennent pas défectueux en même temps. Avec cette dissemblance logicielle en complément facultatif, la mise en œuvre de la fonction critique est encore plus sûre.

Selon un autre aspect complémentaire de l'invention, le rôle de chaque module 24, 26 d'un calculateur électronique 11 est apte à être modifié lors du fonctionnement du calculateur électronique 11. Par exemple, un module de commande 24 est apte à devenir un module de surveillance 26 ou un module de commande 24 mettant en œuvre une première fonction critique est apte à devenir un module de commande 24 mettant en œuvre une deuxième fonction critique, différente de la première fonction critique. Autrement dit, chaque calculateur électronique 11 est reconfigurable dynamiquement. Ainsi, en cas de panne matérielle ou d'erreur logicielle affectant un ou plusieurs calculateurs électroniques 11, le dispositif électronique 10 est apte à être reconfiguré de manière dynamique, afin de mettre en œuvre les fonctions critiques avec le niveau de sûreté désiré.

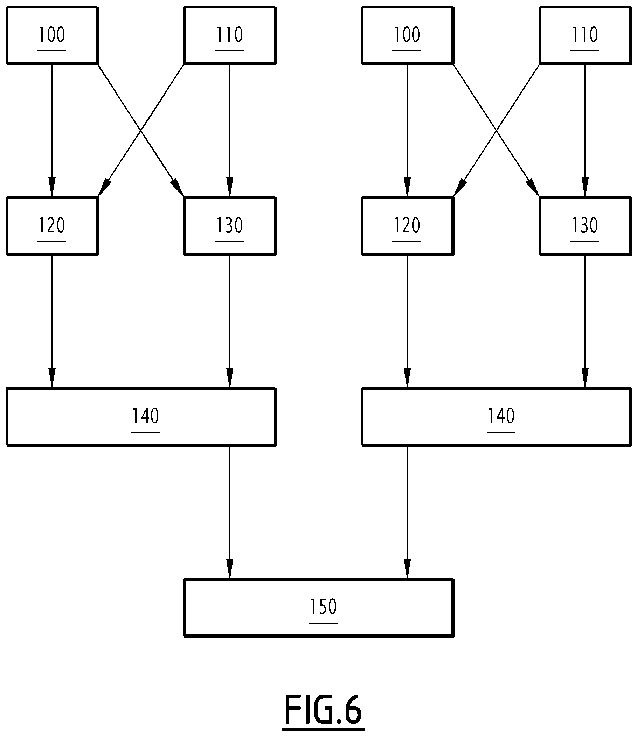

Le fonctionnement du calculateur électronique 11 selon l'invention va désormais être expliqué à l'aide de la figure 6 représentant un organigramme du procédé, selon l'invention, de mise en œuvre d'une fonction critique, le procédé étant mis en œuvre par le calculateur électronique 11 au sein du dispositif électronique 10.

Le procédé décrit ci-dessus est implémenté sous forme d'un ou plusieurs logiciels, c'est-à-dire en forme d'un programme d'ordinateur, il est en outre apte à être enregistré sur un support, non représenté, lisible par ordinateur. Le support lisible par ordinateur est, par exemple, un médium adapté à mémoriser des instructions électroniques et capable d'être couplé à un bus d'un système informatique. A titre d'exemple, le support lisible est une disquette ou disque souple, (de la dénomination anglaise *Floppy disk*)*,* un disque optique, un CD-ROM, un disque magnéto-optique, une mémoire ROM, une mémoire RAM, tout type de mémoire non volatile (par exemple, EPROM, EEPROM, FLASH, NVRAM) une carte magnétique ou une carte optique. Sur le support lisible est alors mémorisé un programme d'ordinateur comprenant des instructions logicielles.

Par souci de simplification de la description, le procédé sera décrit pour le dispositif électronique 10 selon le premier mode de réalisation, comprenant deux calculateurs électroniques 11 et mettant en œuvre une fonction critique donnée, comme représenté sur la figure 2.

L'homme du métier comprendra que ce procédé est applicable à tout type de dispositif électronique 10 selon l'invention, et en particulier analogue pour les deuxième, troisième, quatrième modes de réalisation à celui du premier mode de réalisation décrit ci-après.

Lors d'une étape 100, une première mise en œuvre de la fonction critique est réalisée par chaque module de commande 24. Ensuite, le module de commande 24 communique la donnée de sortie associée à la fonction critique au module de surveillance 26 associé et délivre ladite donnée de sortie par le port de sortie 22.

Lors d'une étape 110, une deuxième mise en œuvre de la fonction critique est réalisée par chaque module de surveillance 26. Ensuite, le module de surveillance 26 communique la donnée de sortie associée à la fonction critique au module de commande 24 associé.

Les termes « première mise en œuvre » et « deuxième mise en œuvre » sont utilisés comme simple terminologie mais n'impliquent aucune relation de corrélation temporelle entre les étapes du procédé. La première mise en œuvre peut être ainsi réalisée avant, en même temps ou après la deuxième mise en œuvre.

Lors d'une étape 120, chaque module de commande 24 reçoit du module de surveillance 26 associé le résultat de mise en œuvre de la fonction critique correspondant à la deuxième mise en œuvre. En cas de détection d'une incohérence entre le résultat de la première mise en œuvre de la fonction critique respective et celui reçu de la part du module de surveillance 26 associé, il inhibe alors la délivrance de la donnée de sortie associée, représentée par l'interrupteur 28.

Lors d'une étape 130, chaque module de surveillance 26 reçoit du module de commande 24 associé le résultat de mise en œuvre de la fonction critique correspondant à la première mise en œuvre. En cas de détection d'une incohérence entre le résultat de la deuxième mise en œuvre de la fonction critique respective et celui reçu de la part du module de commande 24 associé, il inhibe la délivrance de la donnée de sortie associée, représentée par l'interrupteur 29.

La donnée de sortie associée à la fonction critique est délivrée par chaque module de commande 24, lors d'une étape 140, seulement si aucune incohérence n'a été détectée par le module de commande 24 et par le module de surveillance 26.

Lors d'une étape optionnelle 150, chaque paire de modules 24, 26 envoie à l'autre paire de modules 24, 26, une information indiquant si les calculateurs électroniques 11 sur lesquels les modules 24, 26 sont installés sont dans un état fonctionnel, dégradé ou dysfonctionnel. En outre, chaque paire de modules 24, 26 envoie à l'autre paire de modules 24, 26 une information indiquant si la délivrance de la donnée de sortie associée est inhibée ou non.

L'homme du métier comprendra que l'étape 150 est une étape avantageusement mise en œuvre en cas de panne logicielle, mais qu'elle n'est pas nécessaire pour obtenir un calculateur électronique présentant une meilleure disponibilité opérationnelle tout en ayant un encombrement et une masse réduits.

En complément facultatif, parmi les paires de modules 24, 26 installées sur des calculateurs électroniques 11 dans un état fonctionnel ou dégradé, mais dont l'application logicielle associée n'est pas défectueuse, et sur des calculateurs électroniques 11 n'ayant pas inhibé la délivrance de la donnée de sortie, un indice est attribué à chaque paire de modules 24, 26.

Seule la donnée de sortie délivrée par la paire de modules 24, 26 ayant l'indice le plus petit est fournie comme donnée de sortie finale à l'extérieur du dispositif électronique 10 par la borne de sortie 30. La paire de modules 24, 26 ayant l'indice le plus petit est dite engagée.

L'indice de chaque paire de modules 24, 26 change régulièrement afin d'éviter les pannes non détectées ou dites dormantes, et forme alors un jeton (de l'anglais *token*)*.*

Le procédé selon l'invention ne met donc pas en œuvre un algorithme de vote entre les différentes paires de modules 24, 26, à la différence de certains procédés de l'état de la technique.

## Revendications

1. Calculateur électronique (11) configuré pour mettre en œuvre au moins une fonction critique, le calculateur électronique (11) étant apte à délivrer au moins une donnée de sortie associée à chaque fonction critique, le calculateur électronique (11) comprenant :
- au moins un module de commande (24), chaque module de commande (24) étant configuré pour mettre en œuvre une fonction critique respective et apte à délivrer au moins une donnée de sortie associée à ladite fonction critique ;
- au moins un module de surveillance (26) d'un module de commande (24) d'un autre calculateur électronique (11), chaque module de surveillance (26) étant configuré pour mettre en œuvre une même fonction critique respective que celle mise en œuvre par le module de commande (24) surveillé ;
chaque module de commande (24) étant configuré pour recevoir, de la part d'un module de surveillance (26) associé d'un autre calculateur électronique (11), le résultat de mise en œuvre de la fonction critique correspondante, et pour inhiber la délivrance de l'au moins une donnée de sortie associée en cas de détection d'une incohérence entre le résultat de sa mise en œuvre de la fonction critique respective et celui reçu de la part du module de surveillance (26) de l'autre calculateur électronique (11),
chaque module de surveillance (26) étant configuré pour recevoir, de la part d'un module de commande (24) associé d'un autre calculateur électronique (11), le résultat de mise en œuvre de la fonction critique correspondante, et pour inhiber la délivrance, par ledit module de commande (24), de l'au moins une donnée de sortie associée en cas de détection d'une incohérence entre le résultat de sa mise en œuvre de la fonction critique respective et celui reçu de la part du module de commande (24) de l'autre calculateur électronique (11).

2. Calculateur électronique (11) selon la revendication 1, dans lequel le calculateur électronique (11) comprend plusieurs partitions informatiques (27) distinctes, et chaque module parmi l'au moins un module de commande (24) et l'au moins un module de surveillance (26) est installé dans une partition (27) respective.

3. Calculateur électronique (11) selon les revendications 1 ou 2, dans lequel le calculateur électronique (11) comprend sa propre alimentation électrique (20) et sa propre unité de calcul (14).

4. Calculateur électronique (11) selon l'une quelconque des revendications précédentes, dans laquelle la fonction critique est une fonction avionique.

5. Dispositif électronique (10) comprenant N calculateurs électroniques (11), N étant un nombre entier supérieur ou égal à 2, chaque calculateur électronique (11) étant selon l'une quelconques des revendications précédentes.

6. Dispositif électronique (10) selon la revendication 5, dans lequel pour chaque calculateur électronique (11), l'ensemble des calculateurs électroniques (11) comportant un module de commande (24) surveillé par un module de surveillance (26) dudit calculateur électronique (11) et l'ensemble des calculateurs électroniques (11) comprenant un module de surveillance (26) surveillant un module de commande (24) dudit calculateur électronique (11) sont disjoints.

7. Dispositif électronique (10) selon la revendication 5 ou 6, dans lequel le nombre N de calculateurs électroniques (11) est pair, et pour une fonction critique donnée, (N/2) calculateurs électroniques (11) comprennent (N/2-1) modules de commande (24) et (N/2) modules de surveillance (26), (N/2) autres calculateurs électroniques (11) comprennent (N/2) modules de commande (24) et (N/2-1) modules de surveillance (26).

8. Dispositif électronique (10) selon la revendication 5 ou 6, dans lequel le nombre N de calculateurs électroniques (11) est impair, et pour une fonction critique donnée, chaque calculateur électronique (11) comprend ((N-1)/2) modules de commande (24) et ((N-1)/2) modules de surveillance (26).

9. Procédé de mise en œuvre d'au moins une fonction critique, le procédé étant implémenté par un calculateur électronique (11), le calculateur électronique (11) comprenant :
- au moins un module de commande (24), chaque module de commande (24) étant configuré pour mettre en œuvre une fonction critique respective et apte à délivrer au moins une donnée de sortie associée à ladite fonction critique ;
- au moins un module de surveillance (26) d'un module de commande (24) d'un autre calculateur électronique (11), chaque module de surveillance (26) étant configuré pour mettre en œuvre une même fonction critique respective que celle mise en œuvre par le module de commande (24) surveillé ;
le procédé comprenant les étapes suivantes :
- première mise en œuvre (100) par le module de commande (24) d'au moins une fonction critique et délivrance d'au moins une donnée de sortie associée à ladite fonction critique ;
- deuxième mise en œuvre (110) par le module de surveillance (26) d'au moins une fonction critique identique à celle mise en œuvre par un autre calculateur électronique ;
- première réception (120) par le module de commande (24), de la part d'un module de surveillance (26) associé d'un autre calculateur électronique (11), du résultat de mise en œuvre de la fonction critique correspondant à la première mise en œuvre, et inhibition de la délivrance de l'au moins une donnée de sortie associée en cas de détection d'une incohérence entre le résultat de la première mise en œuvre de la fonction critique respective et celui reçu de la part du module de surveillance (26) de l'autre calculateur électronique (11) ;
- deuxième réception (130) par le module de surveillance (26), de la part d'un module de commande (24) associé d'un autre calculateur électronique (11), du résultat de mise en œuvre de la fonction critique correspondant à la deuxième mise en œuvre, et inhibition la délivrance, par l'autre calculateur électronique (11), de l'au moins une donnée de sortie associée en cas de détection d'une incohérence entre le résultat de la deuxième mise en œuvre de la fonction critique respective et celui reçu de la part du module de commande (24) de l'autre calculateur électronique (11).

10. Programme d'ordinateur comportant des instructions logicielles qui, lorsqu'elles sont exécutées par un ordinateur, mettent en œuvre un procédé selon la revendication précédente.

## Patentansprüche

1. Elektronischer Rechner (11), der ausgebildet ist, mindestens eine kritische Funktion auszuführen, wobei der elektronische Rechner (11) geeignet ist, mindestens ein Ausgangsdatenelement, das jeder kritischen Funktion zugeordnet ist, zu liefern, wobei der elektronische Rechner (11) umfasst:
- mindestens ein Steuermodul (24), wobei jedes Steuermodul (24) ausgebildet ist, eine jeweilige kritische Funktion durchzuführen, und geeignet ist, mindestens ein Ausgangsdatenelement, das der kritischen Funktion zugeordnet ist, zu liefern;
- mindestens ein Überwachungsmodul (26) eines Steuermoduls (24) eines anderen elektronischen Rechners (11), wobei jedes Überwachungsmodul (26) ausgebildet ist, eine selbe jeweilige kritische Funktion wie diejenige, die von dem überwachten Steuermodul (24) durchgeführt wird, durchzuführen;
- wobei jedes Steuermodul (24) ausgebildet ist, seitens eines einem anderen elektronischen Rechners (11) zugeordneten Überwachungsmoduls (26) das Ergebnis der Durchführung der korrespondierenden kritischen Funktion zu empfangen und die Lieferung des mindestens einen zugeordneten Ausgangsdatenelements im Fall der Detektion einer Unstimmigkeit zwischen dem Ergebnis seiner Durchführung der jeweiligen kritischen Funktion und dem, das seitens des Überwachungsmoduls (26) des anderen elektronischen Rechners (11) empfangen wird, zu sperren,
- wobei jedes Überwachungsmodul (26) ausgebildet ist, seitens eines einem anderen elektronischen Rechner (11) zugeordneten Steuermoduls (24) das Ergebnis der Durchführung der korrespondierenden kritischen Funktion zu empfangen und die Lieferung des mindestens einen zugeordneten Ausgangsdatenelement im Fall der Detektion einer Unstimmigkeit zwischen dem Ergebnis seiner Durchführung der jeweiligen kritischen Funktionen und dem, das seitens des Steuermoduls (24) des anderen elektronischen Rechners (11) empfangen wird, durch das Steuermodul (24) zu sperren.

2. Elektronischer Rechner (11) nach Anspruch 1, bei dem der elektronische Rechner (11) mehrere unterschiedliche Partitionen (27) umfasst und jedes Modul von dem mindestens einen Steuermodul (24) und dem mindestens einen Überwachungsmodul (26) in einer jeweiligen Partition (27) installiert ist.

3. Elektronischer Rechner (11) nach den Ansprüchen 1 oder 2, bei dem der elektronische Rechner (11) seine eigene elektrische Versorgung (20) und seine eigene Rechnereinheit (14) umfasst.

4. Elektronischer Rechner (11) nach einem beliebigen der vorhergehenden Ansprüche, bei dem die kritische Funktion eine luftfahrttechnische Funktion ist.

5. Elektronische Vorrichtung (10) N elektronische Rechner (11) umfassend, wobei N eine ganze Zahl größer oder gleich zwei ist und jeder elektronischer Rechner (11) nach einem beliebigen der vorhergehenden Ansprüche ausgebildet ist.

6. Elektronische Vorrichtung (10) nach Anspruch 5, bei der für jeden elektronischen Rechner (11) die Gesamtheit der elektronischen Rechner (11), die ein Steuermodul (24) aufweisen, das von einem Überwachungsmodul (26) des elektronischen Rechners (11) überwacht ist, und die Gesamtheit der elektronischen Rechner (11), die ein ein Steuermodul (24) des elektronischen Rechners (11) überwachendes Überwachungsmodul (26) umfassen, getrennt sind.

7. Elektronische Vorrichtung (10) nach Anspruch 5 oder 6, bei der die Anzahl N von elektronischen Rechnern (11) gerade ist und für eine gegebene kritische Funktion (N/2) elektronische Rechner (11) (N/2-1) Steuermodule (24) und (N/2) Überwachungsmodule (26) umfassen und (N/2) andere elektronische Rechner (11) (N/2) Steuermodule (24) und (N/2-1) Überwachungsmodule (26) umfassen.

8. Elektronische Vorrichtung (10) nach Anspruch 5 oder 6, bei der die Anzahl N von elektronischen Rechnern (11) ungerade ist und für eine gegebene kritische Funktion jeder elektronische Rechner (11) ((N-l)/2) Steuermodule (24) und ((N-l)/2) Überwachungsmodule (26) umfasst.

9. Verfahren zur Durchführung mindestens einer kritischen Funktion, wobei das Verfahren durch einen elektronischen Rechner (11) implementiert ist, wobei der elektronische Rechner (11) umfasst:
- mindestens ein Steuermodul (24), wobei jedes Steuermodul (24) ausgebildet ist, eine jeweilige kritische Funktion durchzuführen, und geeignet ist, mindestens ein Ausgangsdatenelement, das der kritischen Funktion zugeordnet ist, zu liefern;
- mindestens ein Überwachungsmodul (26) eines Steuermoduls (24) eines anderen elektronischen Rechners (11), wobei jedes Überwachungsmodul (26) ausgebildet ist, eine selbe jeweilige kritische Funktion wie diejenige, die von dem überwachten Steuermodul (24) durchgeführt wird, durchzuführen;
wobei das Verfahren die folgenden Schritte umfasst:
- erstes Durchführen (100) von mindestens einer kritischen Funktionen durch das Steuermodul (24) und Liefern mindestens eines der kritischen Funktion zugeordneten Ausgangsdatenelementes;
- zweites Durchführen (110) mindestens einer kritischen Funktion, die identischen zu der ist, die von einem anderen elektronischen Rechner durchgeführt wird, durch das Überwachungsmodul (26);
- erstes Empfangen (120) des Ergebnisses der Durchführung der dem ersten Durchführen korrespondierenden kritischen Funktion durch das Steuermodul (24) seitens eines einem anderen elektronischen Rechner (11) zugeordneten Überwachungsmoduls (26) und Sperren der Lieferung des mindestens einen zugeordneten Datenelementes im Fall einer Detektion einer Unstimmigkeit zwischen dem Ergebnis des ersten Durchführens der jeweiligen kritischen Funktion und dem, das seitens des Überwachungsmoduls (26) des anderen elektronischen Rechners (11) empfangen wird;
- zweites Empfangen (130) des Ergebnisses der Durchführung der dem zweiten Durchführen korrespondierenden kritischen Funktion durch das Überwachungsmodul (26) seitens eines einem anderen elektronischen Rechner (11) zugeordneten Steuermoduls (24) und Sperren der Lieferung des mindestens einen zugeordneten Datenelementes im Fall einer Detektion einer Unstimmigkeit zwischen dem Ergebnis des zweiten Durchführens der jeweiligen kritischen Funktion und dem, das seitens des Steuermoduls (24) des anderen elektronischen Rechners (11) empfangen wird.

10. Rechnerprogramm, das Softwarebefehle aufweist, die, wenn sie von einem Rechner ausgeführt werden, ein Verfahren nach dem vorhergehenden Anspruch durchführen.

## Claims

1. Electronic computer (11) configured to implement at least one critical function, wherein the electronic computer (11) is able to deliver at least one output data item associated with each critical function, and wherein the electronic computer (11) comprises:
- at least one control module (24), wherein each control module (24) is configured to implement a respective critical function and is capable of delivering at least one output data item associated with the critical function;
- at least one monitoring module (26) of a control module (24) of another electronic computer (11), wherein each monitoring module (26) is configured to implement the same respective critical function as the one implemented by the monitored control module (24);
wherein each control module (24) is configured to receive, from an associated monitoring module (26) of another electronic computer (11), the result of implementing the corresponding critical function, and to inhibit the delivery of the at least one associated output data item in the event of detection of an inconsistency between the result of its implementation of the respective critical function and that received from the monitoring module (26) of the other electronic computer (11),
wherein each monitoring module (26) is configured to receive, from an associated control module (24) of another electronic computer (11), the result of implementing the corresponding critical function, and to inhibit the delivery, by the control module (24), of the at least one associated output data item in the event of detection of an inconsistency between the result of its implementation of the respective critical function and that received from the control module (24) of the other electronic computer (11).

2. Electronic computer (11) according to claim 1, wherein the electronic computer (11) comprises several separate computer partitions (27), and each module among the at least one control module (24) and the at least one monitoring module (26) is installed in a respective partition (27).

3. Electronic computer (11) according to claims 1 or 2, wherein the electronic computer (11) comprises its own power supply (20) and its own computer unit (14).

4. Electronic computer (11) according to any one of the preceding claims, wherein the critical function is an avionics function.

5. Electronic device (10) comprising N electronic computers (11), wherein N is an integer greater than or equal to 2, and wherein each electronic computer (11) is according to any one of the preceding claims.

6. Electronic device (10) according to claim 5, wherein for each electronic computer (11), the set of electronic computers (11) comprising a control module (24) monitored by a monitoring module (26) of the electronic computer (11) and all electronic computers (11) comprising a monitoring module (26) monitoring a control module (24) of the electronic computer (11) are separate.

7. Electronic device (10) according to claim 5 or 6, wherein the number N of electronic computers (11) is even, and for a given critical function, (N/2) electronic computers (11) comprise (N/2-1) control modules (24) and (N/2) monitoring modules (26), while (N/2) other electronic computers (11) comprise (N/2) control modules (24) and (N/2-1) monitoring modules (26).

8. Electronic device (10) according to claim 5 or 6, wherein the number N of electronic computers (11) is odd, and for a given critical function, each electronic computer (11) comprises ((N-1)/2) control modules (24) and ((N-1)/2) monitoring modules (26).

9. Method for implementing at least one critical function, wherein the method is implemented by an electronic computer (11), the electronic computer (11) comprising:
- at least one control module (24), wherein each control module (24) is configured to implement a respective critical function and is capable of delivering at least one output data item associated with the critical function;
- at least one monitoring module (26) of a control module (24) of another electronic computer (11), wherein each monitoring module (26) is configured to implement the same respective critical function as the one implemented by the monitored control module (24);
the method comprising the following steps:
- first implementation (100) by the control module (24) of at least one critical function and delivery of at least one output data item associated with the critical function;
- second implementation (110) by the monitoring module (26) of at least one critical function identical to that implemented by another electronic computer;
- first reception (120) by the control module (24), from a monitoring module (26) of another electronic computer (11), of the result of implementation of the critical function corresponding to the first implementation, and inhibition of the delivery of the at least one associated output data item, when an inconsistency is detected between the result of the first implementation of the respective critical function and that received from the monitoring module (26) of the the other electronic computer (11);
- second reception (130) by the monitoring module (26), from a control module (24) of another electronic computer (11), of the result of implementation of the critical function corresponding to the second implementation, and inhibition of the delivery, by the other electronic computer (11) of the at least one associated output data item when an inconsistency is detected between the result of the second implementation of the respective critical function and that received from the control module (24) of the other electronic computer (11).

10. Computer program comprising software instructions which, when executed by a computer, implement a method according to the preceding claim.
